# EUROPEAN PATENT SPECIFICATION

(11) **EP 4 280 854 B1**
(45) Date of publication and mention of the grant of the patent: **21.02.2024**
(21) Application number: 21819912.3
(22) Date of filing: 08.12.2021
(51) Int. Cl.: A01B 1/18

(54) **GARDENING TOOL**
GARTENWERKZEUG
OUTIL DE JARDINAGE

(30) Priority: 23.03.2021 EP 21164177
(43) Date of publication of application: 29.11.2023
(73) Proprietor: HUSQVARNA AB, 561 82 Huskvarna (SE)
(72) Inventor: KOHL, Peter, 89257 Illertissen (DE); KAST, Wolfgang, 89143 Blaubeuren (DE); MAAG, Markus, 89081 Ulm (DE)
(74) Representative: Finkele, Rolf
(86) International application number: PCT/EP2021/084798
(87) International publication number: WO 2022/199873

(56) References cited:
- CN-U- 203 661 519
- DE-A1-102011 114 901
- DE-U1-202007 002 223
- US-A1- 2009 273 198

## Description

### TECHNICAL FIELD

The present disclosure relates to a gardening tool. More particularly, the present disclosure relates to a weed puller.

### BACKGROUND

Tools, such as weed pullers, garden trowels, forked-handheld digging devices, may generally include a footstep removal mechanism. Such tools are used to remove weeds from a ground surface, such as a lawn and a garden. Such tools may include an L-shaped structure and generally include a foot lever that is coupled substantially perpendicular to a handle of the tool. However, such a perpendicular arrangement of the foot lever requires more storage space, which is not desirable. Further, the perpendicular arrangement of the foot lever with the handle may affect aesthetics of the tool in a stored position. Moreover, the perpendicular arrangement of the foot lever may present safety hazards while storage or transportation of the tool.

An example of a weed or grass removing device (or tool) is provided in Chinese Utility Model 203,661,519 (hereinafter referred to as '519 reference). The '519 reference discloses the grass removing device that includes a base, a handle pivotally connected to the base, and a clamping jaw disposed at the bottom of the base. A clamping portion corresponding to the clamping jaw is provided at the lower end of the handle in an extending manner. A pedal support portion is removably and pivotally connected to the side of the base by a pin through a pivot point. The pedal support portion can rotate around the pivot. The '519 reference discloses a pivotable pedal support portion that pivots from a substantially perpendicular position to a substantially parallel position relative to the handle. The pedal support portion in the substantially parallel position relative to the handle seems to increase the length of the device and hence the device requires more storage space, which is not desirable.

Thus, there is a need of an improved design of the tool with an adjustable foot lever to reduce the storage space and improve safety during storage and transportation.

### SUMMARY

In view of the above, it is an objective of the present disclosure to solve or at least reduce the drawbacks discussed above. The objective is at least partially achieved by a new design of a tool. The tool includes a handle. The tool also includes at least two blades operatively coupled with the handle. The at least two blades perform one or more gardening operations based on operation of the handle. The tool further includes a foot lever operatively coupled with the handle. The tool is characterized in that a pin is at least partially removably coupled to the foot lever and the handle. When the pin is at least partially removed, the foot lever is pivotably rotatable between a working position and a storage position. Further, the foot lever in the storage position is substantially parallel to the handle and the at least two blades are closed.

Thus, the present disclosure provides an improved design of the tool with the pin that allows removable coupling of the foot lever and the handle. A simple and cost effective design of the tool allows a user to pivotally rotate the foot lever between the working position and the storage position. With the improved configuration, in the working position, the foot lever is substantially perpendicular to the handle and, in the storage position of the foot lever, the foot lever may be rotated such that the foot lever is substantially parallel to the handle. Further, the substantially parallel arrangement of the foot lever reduces storage space requirements in the storage position. Thus, the tool can be safely, conveniently stored in compact spaces. Further, in the storage position of the foot lever the one or more blades get closed which thereby increases safety while storage or transportation of the tool. Furthermore, the parallel arrangement of the foot lever in the storage position improves aesthetics of the tool in the storage position. Moreover, the parallel arrangement of the foot lever in the storage position may reduce safety, part-damage hazards during storage or transportation of the tool.

According to an embodiment of the present disclosure, the foot lever in the working position is substantially perpendicular to the handle. The foot lever can be used to press the blades of the tool into the ground surface during a weed removal operation. This arrangement provides a simple, ergonomic, and user-friendly design of the tool which assists in the weed removal operation.

According to an embodiment of the present disclosure, the handle includes a turning action for closing of the at least two blades. This arrangement provides a mechanical advantage to the tool during weed removal operation as a pull force applied by the user at a first portion of a handlebar allows closing of the one or more blades at a second portion of the handlebar.

According to an embodiment of the present disclosure, the tool further includes a slider to remove weed engaged with the at leat two blades. A design of the slider is simple and allows quick removal of the weed from the tool, which may save user time and efforts. Thus, the slider improves an efficiency of the weed removal operation.

According to an embodiment of the present disclosure, the pin is coupled to the foot lever and the handle, when the foot lever is in the storage position. Such a locking arrangement locks the foot lever in the storage position. Further, the locking arrangement eliminates an inadvertent rotational movement of the foot lever during storage or transportation of the tool, thereby increasing the safety. According to an embodiment of the present disclosure, in the storage position the one or more blades of the tool are closed. Thus there exists a much reduced risk to get injured as the blades to not protrude individually from the tool but are in a closed configuration, and even could be brough into a protected position.

According to an embodiment of the present disclosure, in the storage position of the foot lever the pin is inserted back into one or more of the foot lever and the handle. The coupling of the pin to the foot lever and the handle in the storage position locks the foot lever in place thereby restricting the rotational movement of the foot lever about a pivot point.

According to an embodiment of the present disclosure, the pin is fully removable. This arrangement allows full removal of the pin for applications such as maintenance and disassembly of the tool. Further, this may provide options of servicing or replacement of the pin itself.

According to an embodiment of the present disclosure, the foot lever includes an indent at a bottom of the foot lever. The indent allows the foot lever to rest in the storage position without interference with the handle.

According to an embodiment of the present disclosure, the indent of the foot lever has a shape corresponding to a shape of the handle. The similar shape of the indent and the handle improve the aesthetics of the tool. Further, the similar shape of the indent receives a portion of the handlebar in the storage position of the foot lever, thereby reducing a footprint associated with the tool.

According to an embodiment of the present disclosure, the indent allows form-fit connection of the foot lever in the storage position and the handle. The form-fit connection locks the foot lever in the storage position thereby eliminating any inadvertent rotational movement of the foot lever during storage or transportation of the tool.

According to an embodiment of the present disclosure, the tool is a weed puller. The weed puller is used to remove the weeds in the lawns, gardens, and other ground surfaces.

Other features and aspects of this disclosure will be apparent from the following description and the accompanying drawings.

### BRIEF DESCRIPTION OF THE DRAWINGS

The disclosure will be described in more detail with reference to the enclosed drawings, wherein:
**FIG. 1** illustrates a perspective view of a tool in a working position, according to an embodiment of the present disclosure;
**FIG. 2** illustrates a perspective view of the tool during a turning action, according to an embodiment of the present disclosure;
**FIG. 3** illustrates a perspective view around a foot lever of the tool in a working position, according to an embodiment of the present disclosure;
**FIG. 4** illustrates a perspective view around the foot lever of the tool in an intermediate position, according to an embodiment of the present disclosure; and
**FIG. 5** illustrates a perspective view around the foot lever of the tool in a storage position, according to an embodiment of the present disclosure.

### DESCRIPTION OF EMBODIMENTS

The present disclosure will be described more fully hereinafter with reference to the accompanying drawings, in which example embodiments of the disclosure incorporating one or more aspects of the present disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art. For example, one or more aspects of the present disclosure may be utilized in other embodiments and even other types of structures and/or methods. In the drawings, like numbers refer to like elements.

Certain terminology is used herein for convenience only and is not to be taken as a limitation on the disclosure. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

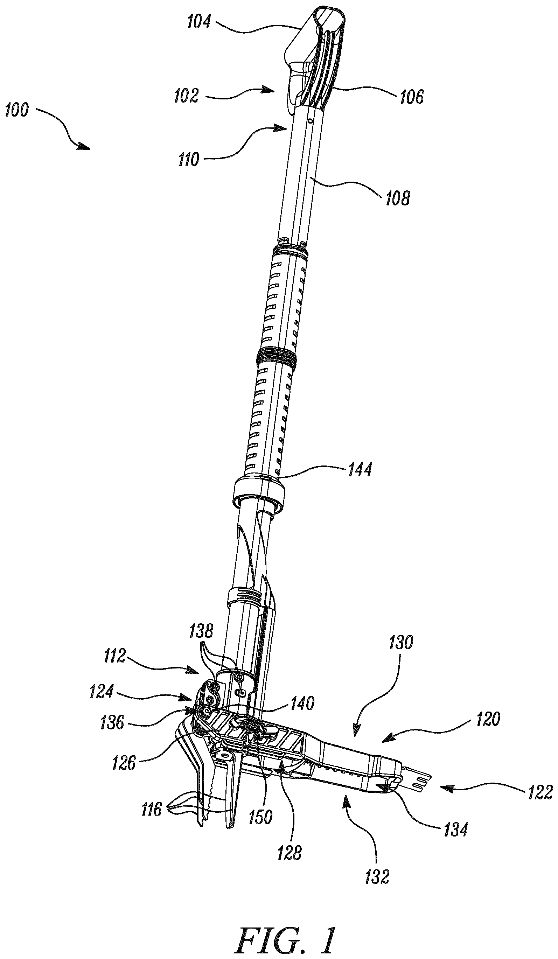

**FIG. 1** illustrates a perspective view of a tool **100** in a working position. The tool **100** can be used for various gardening operation such as removing weeds and the like from a ground surface of a lawn, a garden, and the like. In the present invention, the tool **100** is illustrated as a weed puller. However, the tool **100** may include any type of tool, without limiting scope of the present invention. The tool **100** includes a handle **102.** The handle **102** includes a first part **104** and a second part **106.** The first part **104** of the handle **102** may include a knurling portion or different gripping features for better grip during gardening operations. The handle **102** allows a user to hold the tool **100** and manipulate the tool **100** by hands. The handle **102** is ergonomically designed to allow efficient operation of the tool **100.** The handle **102** may include any shape or size depending upon application requirements. The handle **102** may be made up of any suitable material, such as plastic, metal, and the like.

The handle **102** also includes a handlebar **108.** The handlebar **108** includes a first portion **110** coupled to the second part **106** of the handle **102** and a second portion **112** opposite to the first portion **110.** The handlebar **108** defines a first pin hole (not shown) proximate the second portion **112** of the handlebar **108.** The handlebar **108** may be made up of any material, such as plastic, metal, and the like. In the illustrated embodiment, the handlebar **108** includes a circular cross-section. It should be noted that the handlebar **108** may include any other cross-section, without limiting the scope of the present invention. In some embodiments, one or more of the second part **106** and the first part **104** may include a button, switch, and the like to allow change in size of the first portion **110** of the handlebar **108** (or even for the second portion **112**). This may allow to have different lengths i.e., linear dimensions of the first portion **110** and the second portion **112** coupled with the handle **102.** For example, the handlebar **108** may include a telescopic design.

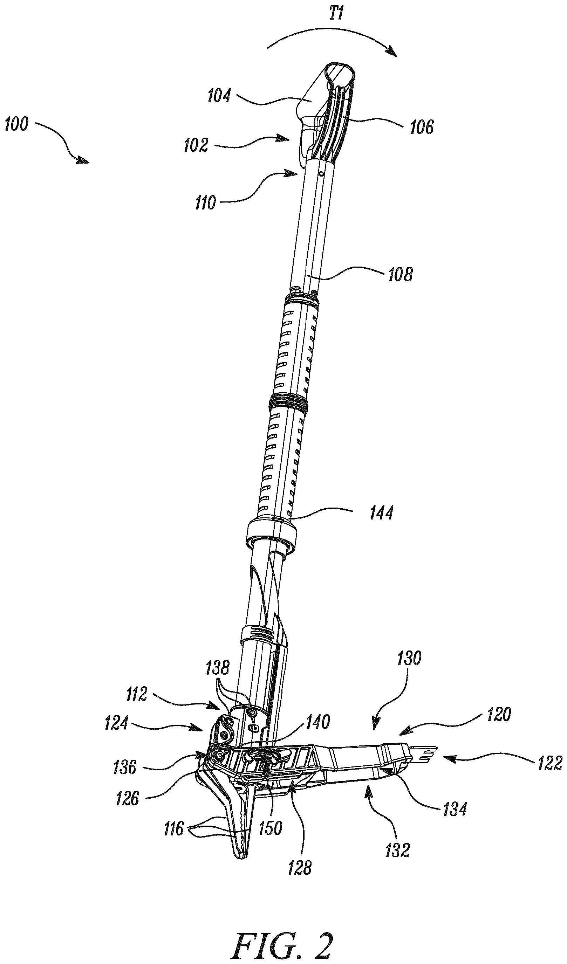

Referring to **FIG. 2****,** the tool **100** further includes two or more blades **116** operatively coupled with the handle **102.** The two or more blades **116** perform one or more gardening operations based on operation of the handle **102.** In the illustrated embodiment, the tool **100** includes four blades **116.** In some other embodiments, the tool **100** may include any number (but at least two) type, dimension, arrangement of blades **116,** without limiting the scope of the present invention. The blade **116** may be made up of carbon steel, stainless steel, alloy steel, and the like. The handle **102** is actuated by a turning action **"T1"** for closing of the one or more blades **116.** Specifically, the two or more blades **116** perform one or more gardening operations based on the turning action **"T1"** of the handle **102.** In the illustrated embodiment, the turning action **"T1"** of the handle **102** performs the cutting/removing action of the weed from the ground surface. Moreover, the turning action **"T1"** of the handle **102** allows the blades **116** to firmly grip the weed for allowing removing/cutting of the weed from the ground surface. Due to the turning action **"T1"** of the handle **102,** the blades **116** move towards each other to shackle the weed. In some embodiments, the tool **100** may include any other mechanism to perform cutting/removing of the weed from the ground surface, without limiting the scope of the present invention.

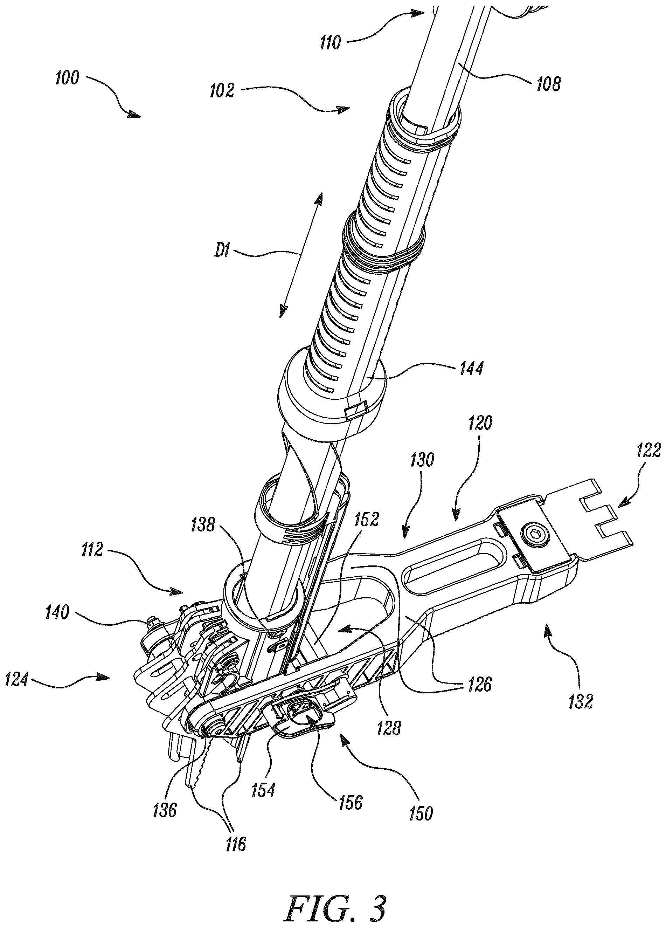

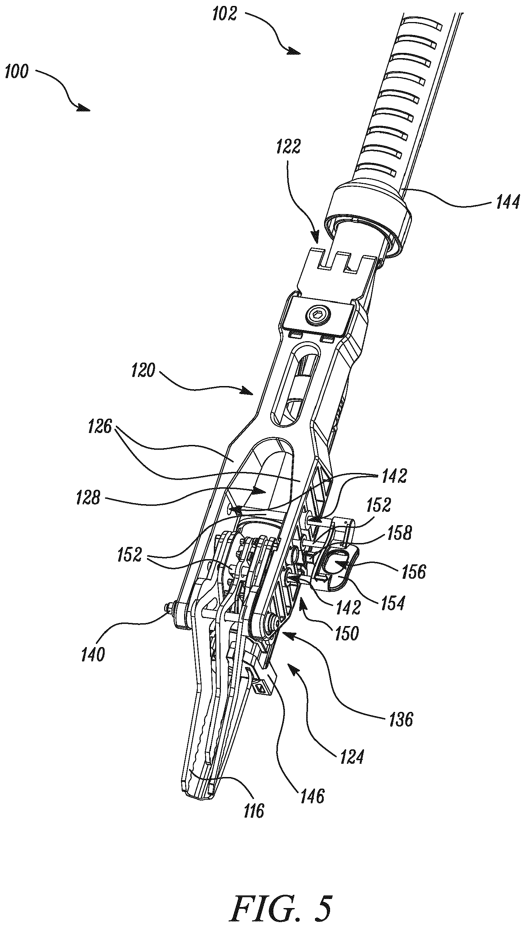

The tool **100** includes a foot lever **120** operatively coupled with the handle **102.** The foot lever **120** in the working position is substantially perpendicular to the handle **102.** The foot lever **120** includes a first end **122.** The foot lever **120** also includes a second end **124.** The foot lever **120** is disposed proximate the second portion **112** of the handlebar **108.** The foot lever **120** defines a substantially rectangular shaped structure having a fork shaped design. Specifically, the foot lever **120** includes a pair of forks **126** (best shown in **FIGS. 3****,** **5**). The forks **126** are spaced apart from each other to define a hollow portion **128** therebetween. Dimensions of the hollow portion **128** are decided such that the foot lever **120** can be moved between the working position and the storage position without interfering with the blades **116.**

The foot lever **120** further includes a top **130** and a bottom **132.** The top **130** of the foot lever **120** may define a number of ridges or knurled portions to avoid slipping of the foot of the user during the gardening operation. Further, the foot lever **120** is used to press the tool **100** by a foot of the user on the ground surface during the gardening operation. In some embodiments, the bottom **132** of the foot lever **120** may have a shape or design that allows engagement of the foot lever **120** with the ground surface during the gardening operations.

The foot lever **120** includes an indent **134** at the bottom **132** of the foot lever **120.** Further, the indent **134** of the foot lever **120** has a shape corresponding to a shape of the handle **102.** In the illustrated embodiment, the indent **134** defines a semicircular cross-section. It should be noted that the indent **134** allows form-fit connection of the foot lever **120** in the storage position and the handle **102.** This feature of the indent **134** allows receipt of the handlebar **108** within the indent **134** of the foot lever **120,** thereby further decreasing a storage space required for the tool **100.** The form-fit connection of the foot lever **120** in the storage position may also eliminate an inadvertent rotational movement of the foot lever **120** during storage or transportation of the tool **100,** thereby increasing safety. In some examples, the handlebar **108** may be received within the indent **134** by a snap fit connection that locks the handlebar **108** and the foot lever **120.**

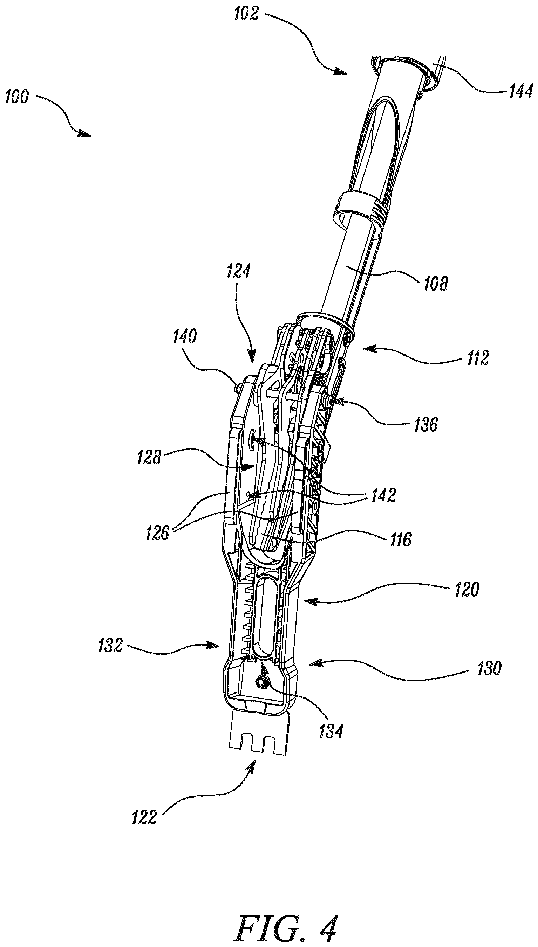

The foot lever **120** is pivotally coupled to the handlebar **108** at a pivot point **136.** Specifically, each of the pair of forks **126** of the foot lever **120** is coupled to the handlebar **108.** A number of mechanical fasteners **138** and a pivot pin **140** may be used for pivotable coupling of the foot lever **120.** The mechanical fasteners **138** may include bolts, screws, pins, rivets, and the like. The foot lever **120** also includes a number of second pin holes **142** (as shown in **FIGS. 4** and **5**) proximate the second end **124** of the foot lever **120.** In some embodiments, the foot lever **120** may be made up of a wear resistant and durable material as it regularly contacts the ground surface.

**FIG. 3** illustrates the tool **100** with the foot lever **120** in the working position. As illustrated, the tool **100** includes a slider **144** to remove the weed engaged with the two or more blades **116.** The slider **144** defines a gripping part that allows gripping of the slider **144** by the user. In some embodiments, the gripping part may include a knurled surface to promote gripping. In the working position of the foot lever **120** of the tool **100,** the slider **144** remains at an initial position. The slider **144** is slidable along a length of the handlebar **108.** The slider **144** is slidable in a direction **"D1"** for removal of the weed. In order to eject the weed from the tool **100,** the slider **144** slides to a final position proximate the second portion **112** of the handlebar **108.** The slider **144** may be provided with a spring member (not shown) to enable a pump action motion. As the user pushes the slider **144** towards the second portion **112** of the handlebar **108,** the spring member biases (say retracts) the slider **144** to its initial position. Further, the pump action motion of the slider **144** allows ejection of the weed from the blades **116.**

The tool **100** includes a push member **146** (as shown in **FIG. 5**) disposed around the blades **116** proximate the second portion **112** of the handlebar **108.** In some embodiments, the slider **144** may be coupled with the push member **146.** As the slider **144** moves, the push member **146** pushes the weed to eject the weed from the blades **116.** Further, the push member **146** may move forward as the slider **144** is pushed by the user, and it returns to its initial position based on the retracting action of the spring member.

The tool **100** also includes a pin **150** (best shown in **FIG. 5**) at least partially removably coupled to the foot lever **120** and the handle **102.** The pin **150** is coupled to the foot lever **120** and the handle **102** when the foot lever **120** is in the storage position. Further, the pin **150** may be easily removed with bare hands (i.e., say without any external tools, accessories, and the like) when the foot lever **120** is to be moved between the storage and working positions. The pin **150** defines a number of elongated parts **152** and a head **154.** In the illustrated embodiment, the pin **150** defines three elongated parts **152** having a circular cross-section. In some embodiments, the pin **150** may include any number of the elongated part **152** with any other shape, size, and cross-section, without limiting the scope of the present invention. The elongated part **152** is partially received by the foot lever **120** and the handlebar **108.** Further, the elongated parts **152** of the pin **150** is partially received by the first pin hole of the handlebar **108** and the second pin holes **142** of the foot lever **120.**

The head **154** of the pin **150** restricts advancement of the pin **150** completely into the foot lever **120** and the handlebar **108.** Further, the head **154** of the pin **150** allows the user to removably couple the pin **150** to the foot lever **120** and the handle **102.** The head **154** of the pin **150** defines a slot **156** which allows the user to hold the pin **150** for removable coupling of the pin **150** to the foot lever **120** and the handle **102.** The pin **150** includes a key member **158** to engage into one of the second pin hole **142** of the foot lever **120.** The pin **150** may be manufactured using a wear resistant material as the pin **150** is subject to wear.

**FIG. 4** illustrates the tool **100** in an intermediate position, particularly the foot lever **120.** When the pin **150** is at least partially removed, the foot lever **120** is pivotably rotatable between the working position and the storage position. Furthermore, the foot lever **120** may rotate about the pivot point **136.** In the intermediate position, the foot lever **120** can be approximately rotated about 90 degrees from the working position or 180 degrees from the storage position. Moreover, in the intermediate position, the foot lever **120** is substantially in-line or in alignment with the handlebar **108.**

**FIG. 5** illustrates the tool **100** in the storage position, particularly the foot lever **120.** For moving the foot lever **120** to the storage position, the foot lever **120** can be approximately rotated about 270 degrees from the working position. The foot lever **120** in the storage position is substantially parallel to the handle **102.** In the storage position of the foot lever **120** the pin **150** is inserted back into one or more of the foot lever and the handle. Further, the pin **150** is then coupled with the foot lever **120** and the handle **102.** The coupling of the pin **150** to the foot lever **120** and the handle **102** in the storage position locks the foot lever **120** in place thereby restricting the rotational movement of the foot lever **120** about the pivot point **136.** As the foot lever **120** is moved to the storage position, a portion of the handlebar **108** is received within the indent **134** of the foot lever **120,** thereby providing the form-fit connection therebetween. Further, the pin **150** can be removed to change the position of the foot lever **120** from the storage position to the working position. In some embodiments, the pin **150** is fully removable. This arrangement desired servicing, maintenance, or disassembly of the tool **100.** Such fully removable nature of the pin **150** may also allow ease of maintenance or replacement thereof.

The present invention provides an improved design of the tool **100** with the pin **150** that may be removably coupled to the foot lever **120** and the handle **102.** By virtue of the pin **150,** in the working position of the foot lever **120,** the foot lever **120** is substantially perpendicular to the handle **102,** and in the storage position of the foot lever **120,** the foot lever **120** may be disposed substantially parallel to the handle **102.** Further, the pin **150** can be easily engaged and removed from the foot lever **120** and the handlebar **108** without requirement of any additional tools, accessories and the like.

A simple and cost-effective design of the tool **100** allows the user to pivotally rotate the foot lever **120** between the working position and the storage position. Further, the substantially parallel arrangement of the foot lever **120** reduces storage space requirements in the storage position. Thus, the tool **100** may have a smaller footprint and can be accommodated in compact spaces. Further, in the storage position of the foot lever **120,** the two or more blades **116** are closed (as shown in **FIG. 5**) which thereby increases safety while storage or transportation of the tool **100.** Such closing of the one or more blades **116** in the storage position of the foot lever **120** may also lower spatial footprint of the tool **100,** among other implementation benefits. Furthermore, the parallel arrangement of the foot lever **120** in the storage position provides improved aesthetics to the tool **100** in the storage position. Moreover, the parallel arrangement of the foot lever **120** in the storage position improves safety during storage or transportation of the tool **100.**

In the drawings and specification, there have been disclosed preferred embodiments and examples of the disclosure and, although specific terms are employed, they are used in a generic and descriptive sense only and not for the purpose of limitation of the scope of the disclosure being set forth in the following claims.

### LIST OF ELEMENTS

- **100**: Tool
- **102**: Handle
- **104**: First Part
- **106**: Second Part
- **108**: Handlebar
- **110**: First Portion
- **112**: Second Portion
- **116**: Blades
- **120**: Foot Lever
- **122**: First End
- **124**: Second End
- **126**: Fork
- **128**: Hollow Portion
- **130**: Top
- **132**: Bottom
- **134**: Indent
- **136**: Pivot Point
- **138**: Mechanical Fasteners
- **140**: Pivot Pin
- **142**: Second Pin Hole
- **144**: Slider
- **146**: Push Member
- **150**: Pin
- **152**: Elongated Part
- **154**: Head
- **156**: Slot
- **158**: Key Member
- **T1**: Turning Action
- **D1**: Sliding Direction of Slider

## Claims

1. A tool **(100)** comprising:
a handle **(102);**
at least two blades **(116)** operatively coupled with the handle **(102),** wherein the at least two blades **(116)** are adapted to perform one or more gardening operations based on operation of the handle **(102);** and
a foot lever **(120)** operatively coupled with the handle **(102);**
a pin **(150)** adapted to be at least partially removably coupled to the foot lever **(120)** and the handle **(102),** wherein when the pin **(150)** is at least partially removed, the foot lever **(120)** is pivotably rotatable between a working position and a storage position, wherein the foot lever **(120)** in the storage position is substantially parallel to the handle **(102),** and **characterized in that** in the storage position the at least two blades **(116)** are closed.

2. The tool **(100)** of claim 1, wherein the foot lever **(120)** in the working position is substantially perpendicular to the handle **(102).**

3. The tool **(100)** of any one of the preceding claims, wherein the handle **(102)** includes a turning action **("T1")** for closing of the at least two blades **(116).**

4. The tool **(100)** of any one of the preceding claims, wherein the tool **(100)** further includes a slider **(144)** adapted to remove a weed engaged with the at least two blades **(116).**

5. The tool **(100)** of any one of the preceding claims, wherein the pin **(150)** is coupled to the foot lever **(120)** and the handle **(102),** when the foot lever **(120)** is in the storage position.

6. The tool **(100)** of any one of the preceding claims, wherein the foot lever **(120)** includes an indent **(134)** at a bottom **(132)** of the foot lever **(120).**

7. The tool **(100)** of any one of the preceding claims, wherein the pin **(150)** is fully removable.

8. The tool **(100)** of any one of the preceding claims, wherein in the storage position of the foot lever **(120)** the pin **(150)** is inserted back into one or more of the foot lever **(120)** and the handle **(102).**

9. The tool **(100)** of any one of the preceding claims, wherein the indent **(134)** of the foot lever **(120)** has a shape corresponding to a shape of the handle **(102).**

10. The tool **(100)** of any one of the preceding claims, wherein the indent **(134)** allows form-fit connection of the foot lever **(120)** in the storage position and the handle **(102).**

11. The tool **(100)** of any of the preceding claims, wherein the tool **(100)** is a weed puller.

## Patentansprüche

1. Werkzeug **(100),** umfassend:
einen Griff **(102);**
mindestens zwei Klingen **(116),** wirkgekoppelt mit dem Griff **(102),** wobei die mindestens zwei Klingen **(116)** angepasst sind, um eine oder mehrere Gartenarbeitsoperationen basierend auf dem Betrieb des Griffs **(102)** durchzuführen; und
einen Fußhebel **(120),** wirkgekoppelt mit dem Griff **(102);**
einen Stift **(150),** der angepasst ist, um mindestens teilweise entfernbar mit dem Fußhebel **(120)** und dem Griff **(102)** gekoppelt zu werden, wobei, wenn der Stift **(150)** mindestens teilweise entfernt wird, der Fußhebel **(120)** zwischen einer Arbeitsposition und einer Aufbewahrungsposition schwenkbar drehbar ist, wobei der Fußhebel **(120)** in der Aufbewahrungsposition im Wesentlichen parallel zu dem Griff **(102)** ist und **dadurch gekennzeichnet, dass** in der Aufbewahrungsposition die mindestens zwei Klingen **(116)** geschlossen sind.

2. Werkzeug **(100)** nach Anspruch 1, wobei der Fußhebel **(120)** in der Arbeitsposition im Wesentlichen senkrecht zu dem Griff **(102)** ist.

3. Werkzeug **(100)** nach einem der vorstehenden Ansprüche, wobei der Griff **(102)** einen Wendevorgang **("T1")** zum Schließen der mindestens zwei Klingen **(116)** einschließt.

4. Werkzeug **(100)** nach einem der vorstehenden Ansprüche, wobei das Werkzeug **(100)** ferner einen Schieber **(144)** umfasst, der angepasst ist, um ein Unkraut zu entfernen, das mit den mindestens zwei Klingen **(116)** in Eingriff steht.

5. Werkzeug **(100)** nach einem der vorstehenden Ansprüche, wobei der Stift **(150)** mit dem Fußhebel **(120)** und dem Griff **(102)** gekoppelt ist, wenn sich der Fußhebel **(120)** in der Aufbewahrungsposition befindet.

6. Werkzeug **(100)** nach einem der vorstehenden Ansprüche, wobei der Fußhebel **(120)** eine Vertiefung **(134)** an einem Boden **(132)** des Fußhebels **(120)** einschließt.

7. Werkzeug **(100)** nach einem der vorstehenden Ansprüche, wobei der Stift **(150)** vollständig entfernbar ist.

8. Werkzeug **(100)** nach einem der vorstehenden Ansprüche, wobei in der Aufbewahrungsposition des Fußhebels **(120)** der Stift **(150)** in einen oder mehrere des Fußhebels **(120)** und des Griffs **(102)** zurückeingeführt wird.

9. Werkzeug **(100)** nach einem der vorstehenden Ansprüche, wobei die Vertiefung **(134)** des Fußhebels **(120)** eine Form aufweist, die einer Form des Griffs **(102)** entspricht.

10. Werkzeug **(100)** nach einem der vorstehenden Ansprüche, wobei die Vertiefung **(134)** eine formschlüssige Verbindung des Fußhebels **(120)** in der Aufbewahrungsposition und dem Griff **(102)** erlaubt.

11. Werkzeug **(100)** nach einem der vorstehenden Ansprüche, wobei das Werkzeug **(100)** ein Unkrautzieher ist.

## Revendications

1. Outil **(100)** comprenant :
un manche **(102)** ;
au moins deux lames **(116)** accouplées de manière fonctionnelle au manche **(102),** dans lequel les au moins deux lames **(116)** sont conçues pour effectuer une ou plusieurs opérations de jardinage sur la base de la mise en fonctionnement du manche **(102)** ; et
un levier de pied **(120)** accouplé de manière fonctionnelle au manche **(102)** ;
une broche **(150)** conçue pour être accouplée au moins partiellement de manière amovible au levier de pied **(120)** et au manche **(102),** dans lequel lorsque la broche **(150)** est au moins partiellement retirée, le levier de pied **(120)** peut être rotatif de manière pivotante entre une position de travail et une position de stockage, dans lequel le levier de pied **(120)** dans la position de stockage est sensiblement parallèle au manche (**102),** et **caractérisé en ce que** dans la position de stockage les au moins deux lames **(116)** sont fermées.

2. Outil **(100)** selon la revendication 1, dans lequel le levier de pied **(120)** dans la position de travail est sensiblement perpendiculaire à la poignée **(102).**

3. Outil **(100)** selon l'une quelconque des revendications précédentes, dans lequel la poignée **(102)** comporte une action de rotation (« **T1** ») pour fermer les au moins deux lames **(116).**

4. Outil **(100)** selon l'une quelconque des revendications précédentes, dans lequel l'outil **(100)** comporte en outre un curseur **(144)** conçu pour retirer une mauvaise herbe en prise avec les au moins deux lames **(116).**

5. Outil **(100)** selon l'une quelconque des revendications précédentes, dans lequel la broche **(150)** est accouplée au levier de pied **(120)** et au manche **(102),** lorsque le levier de pied **(120)** est dans la position de stockage.

6. Outil **(100)** selon l'une quelconque des revendications précédentes, dans lequel le levier de pied **(120)** comporte une encoche **(134)** au niveau d'une partie inférieure **(132)** du levier de pied **(120).**

7. Outil **(100)** selon l'une quelconque des revendications précédentes, dans lequel la broche **(150)** est entièrement amovible.

8. Outil **(100)** selon l'une quelconque des revendications précédentes, dans lequel, dans la position de stockage du levier de pied **(120)** la broche **(150)** est insérée dans un ou plusieurs parmi le levier de pied **(120)** et la poignée **(102).**

9. Outil **(100)** selon l'une quelconque des revendications précédentes, dans lequel l'encoche **(134)** du levier de pied **(120)** a une forme correspondant à une forme de la poignée **(102).**

10. Outil **(100)** selon l'une quelconque des revendications précédentes, dans lequel l'encoche **(134)** permet une liaison par complémentarité de forme du levier de pied **(120)** dans la position de stockage et de la poignée **(102).**

11. Outil **(100)** selon l'une quelconque des revendications précédentes, dans lequel l'outil **(100)** est un extracteur de mauvaises herbes.
